# EUROPÄISCHE PATENTSCHRIFT

(11) **EP 1 050 017 B1**
(45) Veröffentlichungstag und Bekanntmachung des Hinweises auf die Patenterteilung: **14.11.2001**
(21) Anmeldenummer: 99901503.5
(22) Anmeldetag: 29.01.1999
(51) Int. Cl.: G06K 19/02, G06K 19/18, B32B 27/08

(54) **DATENTRÄGER IN KARTENFORM**
CARD-SHAPED DATA CARRIER
SUPPORT DE DONNEES SOUS FORME DE CARTE

(30) Priorität: 30.01.1998 AT 15598
(43) Veröffentlichungstag der Anmeldung: 08.11.2000
(73) Patentinhaber: SkiData AG, 5083 Gartenau (AT)
(72) Erfinder: KOCZNAR, Wolfram, A-5020 Salzburg (AT)
(74) Vertreter: Berger, Erhard, Dr.
(86) Internationale Anmeldenummer: AT9900026
(87) Internationale Veröffentlichungsnummer: WO9939306

(56) Entgegenhaltungen:
- EP-A- 0 640 940
- EP-A- 0 757 330
- DE-A- 19 710 656
- GB-A- 2 279 610
- "Handbook of Plastic Materials & Technology" 1990 , IRVIN I. RUBIN , UNITED STATES OF AMERICA XP000189740 siehe Seite 323 siehe Seite 419 - Seite 421 siehe Seite 428 siehe Seite 562

## Beschreibung

Die Erfindung betrifft einen Datenträger in Kartenform, bestehend aus einem Kunststoffkörper, dessen Außenseiten gegebenenfalls bedruckt sind, und in dessen Inneren ein Elektronikmodul eingebettet ist, welches einen elektronischen Schaltkreis und eine mit diesem verbundene, in der Kartenebene liegende Spule umfaßt.

Derartige Datenträger arbeiten üblicherweise nach dem Prinzip eines Transponders. Das Elektronikmodul besteht aus einem integrierten Schaltkreis mit einem Speicher und einer Schreib/Leselogik. Der Schaltkreis ist mit einer Spule verbunden, die zur distanzierten Kommunikation mit Lesegeräten dient. Wird der Transponder in das elektromagnetische Feld eines entsprechenden Lesegerätes gebracht, so können die im Speicher enthaltenen Daten ausgelesen und gegebenenfalls auch geändert werden. Anwendungsgebiete dieser Datenträger sind beispielsweise Ausweis- und Berechtigungskarten in Sport-, Verkehrs- und Sicherheitsbereichen. Wesentliche Vorteile solcher Datenträger sind hoher Benützerkomfort durch berührungsiose Kontrolle und hohe Betriebssicherheit durch kontakt- und verschleißfreie Lesung. Beschränkt werden diese Anwendungen durch die höheren Kosten der Datenträger gegenüber herkömmlichen Magnetkarten, durch technisch noch notwendige größere Abmessungen und durch Empfindlichkeit gegen mechanische Beanspruchungen der Karte.

Allgemein ist es Ziel der Entwicklungsbestrebungen dieser Datenträger, sie in Form üblicher Bankkarten oder Scheckkarten herzustellen. Dieses Format ist der Benützer gewohnt und ermöglicht auch, solche Karten beispielsweise zusätzlich mit Magnetstreifen zu versehen, um sie in konventionellen Systemen einsetzen zu können.

Scheckkarten (Magnetkarten) sind in ihren Abmessungen genormt und etwa 54 mm breit, 86 mm lang und 0,7 bis 0,8 mm dick. Sie werden üblicherweise hergestellt, indem ein oder mehrere Schichten aus PVC unter Hitze und Druck miteinander verpreßt und zu einem kompakten Kartenkörper verbunden werden. Dieses Verfahren für die Karten der eingangs erwähnten Gattung einzusetzen, stößt aufgrund der Empfindlichkeit des Elektronikmoduls gegen mechanische Beanspruchungen auf Probleme.

Man hat für kontaktierte Chipkarten ein Verfahren entwickelt, bei dem ein Kartenkörper entweder im Spritzguß oder durch Verpressen hergestellt wird. Anschließend wird in die Oberfläche des Kartenkörpers eine Ausnehmung gefräst, in welche der Chip eingeklebt wird. Man vermeidet dadurch, den Chip den mechanischen Beanspruchungen (Druck und Hitze) bei der Kartenherstellung auszusetzen.

Datenträger in Transpondertechnik sind gegenüber den vorerwähnten kontaktierten Chipkarten noch um ein Vielfaches mechanisch empfindlicher, da die Spule nicht von den dünnen Verbindungsdränten zum Chip abgetrennt werden darf und auch der Chip bei zu hoher Druckbeanspruchung bruchgefährdet ist

Heute bekannte Herstellungsverfahren verwenden daher gesonderte Gehäuseschalen, in welche das Elektronikmodul eingelegt wird und die anschließend verklebt oder verschweißt werden.

Solcherart lassen sich aber nur relativ dicke Karten herstellen, die in ihren Abmessungen ein Vielfaches der bekannten Scheckkarten betragen.

Es ist auch bekannt, das Elektronikmodul zwischen Außenfolien einzulegen, und den verbleibenden Zwischenraum durch härtbare Harze auszufüllen. Dieses Verfahren ist zeit- und kostenaufwendig.

Es sind auch Karten bekannt, die durch Verpressen von PVC-Folien hergestellt wurden. Solcherart lassen sich bislang nur Datenträger herstellen, die über sehr kleine und dünne Spulen verfugen. Damit können aber keine Datenträger in Lese/Schreibtechnologie eingesetzt werden, da diese wegen des erforderlichen Energiebedarfes und der gewünschten Reichweite große Spulen einsetzen müssen.

Die Erfindung hat sich die Aufgabe gestellt, ein Verfahren zur Herstellung und einen Datenträger der eingangs genannten Gattung zu schaffen, der in den Abmessungen und Eigenschaften einer herkömmlichen Scheckkarte entspricht, und der den auftretenden mechanischen Belastungen in Produktion und Verwendung standhält.

Gemäß der Erfindung ist das Elektronikmodul in eine Kemschicht aus thermoplastischem Kunststoff eingebettet, dessen Schmelzpunkt kleiner als 150°C ist, und beidseitig der Kemschicht sind Folien aufgebracht, deren Schmelzpunkt größer als 150°C ist.

Dieser Aufbau beseitigt eines der Kemprobleme, wenn man das bei Scheckkarten übliche Herstellungsverfahren auf die gattungsgemäßen Datenträger anwendet, nämlich ein Verwerfen der Karte aus der Planlage. Die Erfindung hat erkannt, daß die unterschiedlichen Ausdehnungskoeffizienten der Spule des Elektronikmoduls und des Kartenkörpers aus Kunststoff zu Verwerfungen der Karte führen, sobald man die bei Scheckkarten üblichen geringen Dickenabmessungen zu erreichen versucht. Dadurch, daß während des Verpreßvorganges die Außenschichten nicht erweicht werden, bleiben diese formstabil und leisten etwaigen Spannungen im Inneren des Kartenkörpers nach der Abkühlung ausreichend Widerstand, um eine gute Planlage der Karte zu erreichen. Auf diese Weise kann die Spule des Elektronikmoduls fast die gesamte Fläche der Karte und die Reichweite des Datenträgers ausgezeichnete Werte erreichen.

Zum Stande der Technik seien noch die folgenden Druckschriften erwähnt.

Gemäß der EP-A-0 640 940 wird der Chip samt Spule mittels zweier dünner Schichten zwischen den Deckschichten laminiert

Eine weiters genannte Schicht scheint eine weitere "Mittelschicht" zu sein - die gemäß der vorliegenden Erfindung nicht vorgesehen ist. Die vorliegende Erfindung sieht die Einbettung des Chips in die Kernschicht vor und beschreibt auch völlig andere, konkrete Temperaturunterschiede zwischen den einzelnen Schichten.

In der EP-A-0 075 330 (offenbar eher für kontaktbehaftete Karten gedacht) ist eine Einbettung eines elektronischen Moduls, jedoch nicht in den gesamten Kartenkörper, sondern lediglich in eine entsprechende Öffnung und/oder Aussparung in wenigstens einer Schicht beschrieben, sodaß die Schmelztemperaturverteilung wohl auch nur hier wirksam sein dürfte.

Die vorliegende Erfindung sieht hingegen die Schmelztemperaturverteilung über die gesamten Kartenflächen vor.

Ein erfindungsgemäßes Verfahren zur Herstellung des Datenträgers in Kartenform zeichnet sich dadurch aus, daß das Elektronikmodul zwischen zwei Schichten aus thermoplastischem Kunststoff eingelegt wird, daß auf diese Schichten außenseitig Folien aufgebracht werden, und daß der Datenträger unter Einwirkung von Druck und Hitze in Kartenform verpreßt wird, wobei die maximale Verarbeitungstemperatur unterhalb des Schmelzpunktes der außenseitig aufgebrachten Folien liegt.

Zusammenfassend kann also gesagt werden, daß gerade durch die Kombination der erfindungsgemäß verwendeten Folien im Zusammenhang mit dem dargestellten Herstellungsverfahren auf einfache Weise absolut plane Oberflächen des Datenträgers in Kunststofform ermöglicht und Verwerfungen (Torsionen) und Spannungen des gesamten Kartenkörpers, wie sie bei bisherigen Herstellungsverfahren wegen der Einarbeitung der notwendigen großen Spulen üblich waren, verhindert werden.

Weitere Einzelheiten der Erfindung werden nachfolgend an einem Ausführungsbeispiel erläutert:

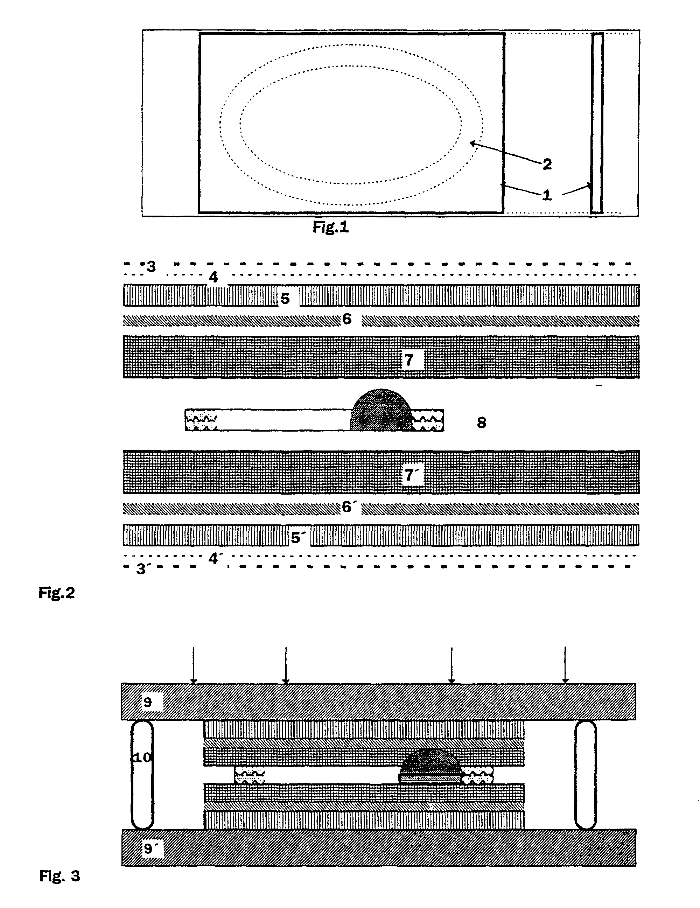

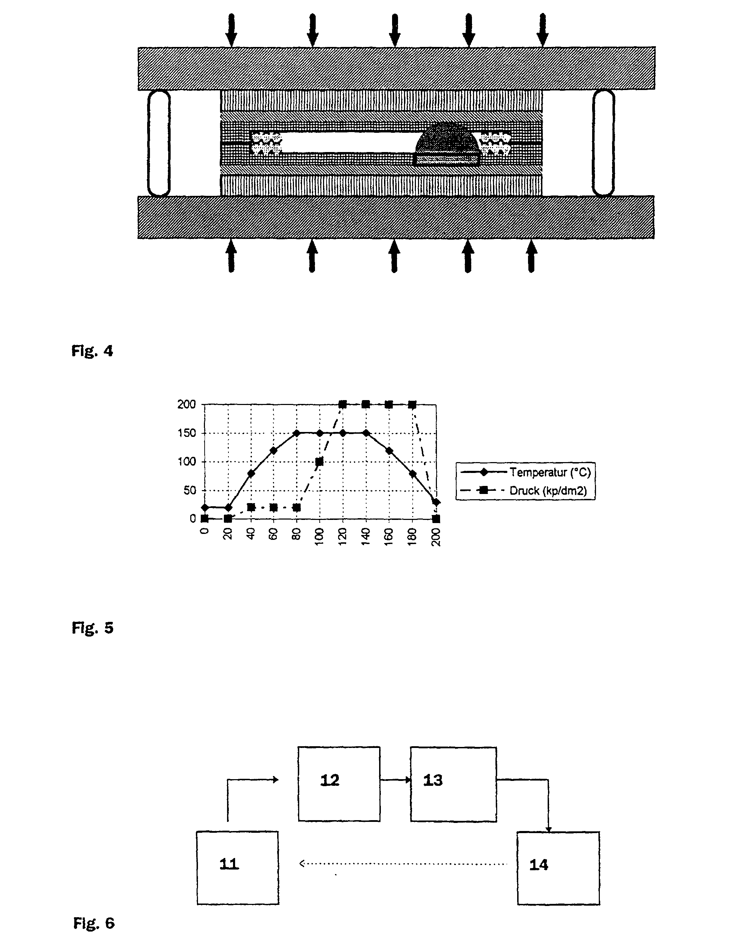

Die Figur 1 zeigt einen Datenträger in Auf- und Seitenansicht, die Figur 2 den Schichtaufbau vor dem Verpreßvorgang, die Figur 3 während des Verpreßvorganges, die Figur 4 nach Abschluß des Verpreßvorganges, die Figur 5 ein Druck- und Temperaturdiagramm des Herstellungsverfahrens und die Figur 6 ein Schema der Vorrichtung zur Durchführung des Herstellungsverfahrens.

Wie in der Figur 1 dargestellt, weist der Datenträger 1 die Form einer üblichen Bankkarte oder Scheckkarte auf. Diese Abmessungen betragen ca. 54 mm Breite, 86 mm Länge und eine Dicke von 0,75 m bis 0,86 mm. Die Erfindung ist nicht auf diese Abmessungen eingeschränkt, es ist aber das Ziel, solche Abmessungen insbesondere in der Kartendicke möglich zu machen. Innerhalb des Kartenkörpers ist ein strichliert dargestelltes Elektronikmodul 2 angeordnet. Es besteht aus einer gewickelten Drahtspule als Sende/Empfangsantenne, die mit einem Schaltkreis verbunden ist. Die Drahtspule ist mit einem innerhalb des Schaltkreises angeordneten Kondensator auf die Kommunikationsfrequenz von beispielsweise 125 kHz abgestimmt.

Es sind aber auch andere Frequenzen möglich, bekannt sind beispielsweise ca. 13 MHz. Grundsätzlich sind niedrigere Frequenzen für die Spulengröße ungünstiger, da die Stärke des Spulendrahtes größer sein muß. Ebenso sind andere Herstellungstechniken für die Spule denkbar, beispielsweise auf Folien aufgedruckte oder ausgeätzte Leiterbahnen. Diese Alternativen weisen aber technische Nachteile auf, weil gewickelte Spulen die höchste Güte haben. Konkret verwendet das Ausführungsbeispiel eine gewickelte Spule in einer Gesamtdicke von 0,3 mm, die in ihren Außenabmessungen bis 2 mm an die Ränder des kartenförmigen Datenträgers 1 reicht. Die Form ist entweder oval oder rechteckig. Damit lassen sich die besten Reichweiten des Datenträgers erzielen.

Die Spule ist mit einem in Form eines ASIC's (anwendungsspezifischer Schaltkreis) realisierten Schaltkreises verbunden. Der Schaltkreis enthält einen Speicher und eine Sende/Empfangslogik und kann mittels der Spule innerhalb des elektromagnetischen Feldes eines geeigneten Lesegerätes Daten senden und gegebenenfalls empfangen. Der Chip ist auf einer dünnen Leiterplatte aufgeklebt und mit ausgehärtetem Harz vergossen. Leiterplatte, Chip und Vergußmasse sind etwa 0,6 mm dick und an die Spule angeheftet.

In Figur 2 ist der Schichtaufbau eines Datenträgers 1 vor dem Verpreßvorgang dargestellt, wobei die Schichtdicken nicht maßstabsgerecht gezeichnet sind. Das Elektronikmodul 8 wird zwischen zwei Schichten 7 aus thermoplastischem Kunststoff eingelegt. Die Schichten 7 weisen jeweils eine Dicke von etwa 0,3 mm auf. Vorteilhaft werden eine Anzahl von Elektronikmodulen 8 nebeneinander zwischen den zwei Schichten 7 angeordnet, um die Produktivität zu verbessern. Weiters ist es möglich, den vorstehend und nachfolgend beschriebenen Herstellungsvorgang noch effizienter zu gestalten, indem auch mehrere Schichtaufbauten übereinander gelegt werden, die durch dünne Preßplatten aus Stahl getrennt sind.

Das Beispiel verwendet als Material für diese Schichten 7 PVC mit einem Schmelzpunkt von ca. 120°C. Als Schmelzpunkt gemäß dieser Beschreibung ist jene Temperatur zu verstehen, bei der ein Kunststoff unter geringem Druck fließfähig wird, also das Elektronikmodul 8 einbetten kann. (Dieser Schmelzpunkt ist nicht mit dem Vicat-Erweichungspunkt zu verwechseln, der lediglich die Erweichung der Oberfläche kennzeichnet, nicht aber dessen Fließfähigkeit).

Auf die später den Kern bildenden Schichten 7 werden nun Folien 5 aufgelegt, die einen Schmelzpunkt aufweisen, der über der vorgesehenen Verarbeitungstemperatur liegt. Im gegenständlichen Fall wird hiezu eine Polyesterfolie in einer Stärke von 0,075 mm eingesetzt. Polyester ist hervorragend geeignet, weil es einen Schmelzpunkt von über 240°C hat, und auch bei hohen Temperaturen von 150°C noch über eine Zugfestigkeit von größer 100 N/qmm verfügt. Diese Eigenschaften sind, wie noch nachfolgend erläutert, von wesentlicher Bedeutung. Um eine gute Verbindung zwischen Kernschicht 7 und Folien 5 zu erreichen, werden Schmelzkleberschichten 6 eingesetzt. Geeignet sind beispielsweise Copolyester oder Copolyamide, deren Verarbeitungstemperaturen zwischen 100°C und 120°C liegen.

Der geschilderte Aufbau ermöglicht es, einen Datenträger 1 herzustellen, der die Dicke einer üblichen Bankkarte aufweist, sowohl in Produktion wie auch in Verwendung ausreichend Festigkeit aufweist, und über eine ausgezeichnete Planlage verfügt.

Die Figur 6 zeigt schematisch eine Anordnung zur Herstellung. In der Einlegestation 11 wird der Schichtaufbau erstellt, wobei die Materialien zwischen Werkzeugplatten aus Stahl eingelegt werden. Sodann wird dieser Aufbau in eine Heizpresse 12 übergeführt. Wie in Figur 3 dargestellt, wird der Schichtaufbau in einem ersten Schritt noch bei Raumtemperatur evakuiert, um Lufteinschlüsse zwischen den einzelnen Schichten zu entfernen. Die Preßplatten 9 sind hiezu durch elastische Dichtungen 10 abgedichtet. Wesentlich ist, daß während der Evakuierung noch keine wesentliche Erwärmung der Materialschichten eintritt, um die Evakuierung nicht durch erweichende Oberflächen zu behindern. Hiezu wird der Schichtaufbau von den Preßplatten distanziert gehalten.

Anschließend werden die Preßplatten 9 auf Kontakt zusammengefahren, und der Schichtaufbau bei minimalem Druck auf 150°C erwärmt. Dieser Vorgang benötigt etwa 40 bis 200 Sekunden, da die Preßplatten 9 der Heizpresse permanent vorgeheizt sind. Durch den minimalen Kontaktdruck wird verhindert, daß die Kernschichten 7 Druck auf das Elektronikmodul 8 ausüben und zur Zerstörung des Chips, zum Verformen der Spule oder anderen Beschädigungen führen können. Nachdem die Kernschichten 7 bis über ihre Schmelztemperatur aufgeheizt sind, werden die Preßplatten 9 unter hohen Druck von 2 kp/qcm gesetzt, sodaß das Elektronikmodul 8 in die Kernschicht 7 eingebettet wird. Dieser Schritt benötigt etwa 80 Sekunden.

Nun wird die Heizpresse 12 geöffnet und der Schichtaufbau in eine Kühlpresse 13 transportiert. Die Preßplatten 9 der Kühlpresse 13 schließen unter hohem Druck von 2 kp/qcm und kühlen das Preßgut auf Raumtemperatur in etwa 60 Sekunden ab. Anschließend werden die einzelnen kartenförmigen Datenträger 1 ausgestanzt.

Wesentlich für den Effekt der Erfindung ist ein möglichst großer Abstand der Schmelztemperaturen der Kernschichten 7 und jener der Außenfolien 5. Im gegenständlichen Beispiel ermöglicht die Verarbeitungstemperatur von 150°C einen schnellen Wärmeübergang und dementsprechend schnelles Erreichen der Schmelztemperatur der Kernschichten, während die Außenfolien formstabil bleiben. Würde man, wie in der Scheckkartenherstellung üblich, als Außenfolien niedrigschmelzende Materialien einsetzen, so erreichen diese während der Verarbeitung die Fließgrenzen und frieren bei der Abkühlung Spannungen ein, die zur Verwerfung der fertigen Karte führen. Auch die hohe Zugfestigkeit der Außenfolien 5 ist von Bedeutung. Einerseits leistet die Folie 5 bei der Verarbeitung Widerstand gegen mögliche Formänderungen, die später zu den genannten Verformungen führen könnten. Anderseits leistet die Außenfolie ausreichend Widerstand, um die im Inneren auftretenden Spannungen auszugleichen.

Bei entsprechend geringem Schmelzpunkt der Kernschichten wären auch Folien 5 aus PET (Polyethylenterephthalat) denkbar. Wesentlicher Vorteil des beschriebenen Verfahrens ist auch, daß die Elektronikmodule direkt in die Kernschichten verpreßt werden können, somit keine Vorbereitungsarbeiten derselben notwendig sind.

Die Folien 5 sind gegebenenfalls transparent ausgeführt, und werden auf der Innenseite (zur Kernschicht liegend) farbig mit beliebigen Motiven bedruckt. Der fertige Datenträger 1 weist damit hervorragende Kratzfestigkeit und Beständigkeit auf. Es kann erforderlich sein, die Folien 5 mit einem Primer zur besseren Haftung von Druckfarben und Klebeschichten vorzubehandeln.

## Patentansprüche

1. Datenträger in Kartenform, bestehend aus einem Kunststofkörper, in dessen Inneren ein Elektronikmodul eingebettet ist, welches einen elektronischen Schaltkreis und eine mit diesem verbundene, in der Kartenebene liegende Spule umfaßt, **dadurch gekennzeichnet, daß** das Elektronikmodul (8) in eine Kernschicht (7) aus thermoplastischem Kunststoff eingebettet ist, dessen Schmelzpunkt kleiner als 150°C ist, und daß beidseitig der Kemschicht (7) Folien (5) aufgebracht sind, deren Schmelzpunkt größer als 150°C ist.

2. Datenträger nach Anspruch 1, **dadurch gekennzeichnet, daß** die Kernschicht (7) einen Schmelzpunkt kleiner als 140°C, vorzugsweise zwischen 100°C und 120°C aufweist.

3. Datenträger nach Anspruch 1, **dadurch gekennzeichnet, daß** die auf die Kernschicht (7) aufgebrachten Folien (5) einen Schmelzpunkt von über 180°C, vorzugsweise zwischen 200°C und 250°C aufweisen.

4. Datenträger nach einern der Ansprüche 1 bis 3, **dadurch gekennzeichnet, daß** die auf die Kernschicht (7) aufgebrachten Folien (5) eine Zugfestigkeit von größer 100 N/qmm, vorzugswelse zwischen 130 und 200 N/qmm aufweisen.

5. Datenträger nach einem der Ansprüche 1 bis 4, **dadurch gekennzeichnet, daß** die Kernschicht (7) zwischen 0,4 und 0,8 mm, vorzugsweise 0,6 mm dick ist, daß die auf diese aufgebrachten Folien (5) zwischen 0,05 und 0,15 mm, vorzugsweise 0,075 mm stark sind, wobei die Folien (5) und die Kernschicht (7) gegebenenfalls mittels einer Schmelzkleberschicht (6) in einer Dicke zwischen 0,02 tis 0,6 mm verbunden sind.

6. Datenträger nach einem der Ansprüche 1 bis 5, **dadurch gekennzeichnet, daß** das Elektronikmodul (8) eine Spule mit einer Dicke zwischen 0,2 bis 0,5 mm. vorzugsweise eine gewickelte Drahtspule mit einer Dicke von 0,25 bis 0,45 mm umfaßt.

7. Datenträger nach Anspruch 6, **dadurch gekennzeichnet, daß** die Drahtspule mittig in der neutralen Faser der Kernschicht (7) liegt und vorzugsweise bis knapp an die Ränder der Kartenform neicht.

8. Datenträger nach Anspruch 6, **dadurch gekennzeichnet, daß** der elektronische Schaltkreis des Elektronikmoduls (8) einen vergossenen Chip mit einer Dicke von 0,5 bis 0,65 mm umfaßt.

9. Datenträger nach einem der Ansprüche 1 bis 8, **dadurch gekennzeichnet, daß** die außen liegenden Folien (5) transparent sind und daß sie auf ihrer zu den Kernschichten (7) gewendeten Seiten bedruckt sind.

10. Datenträger nach einem der Ansprüche 1 bis 8, **dadurch gekennzeichnet, daß** die außen liegenden Folien (5) auf ihrer Außenseite mit einem thermoplastischen Lack beschichtet sind.

11. Verfahren zur Herstellung eines Datenträgers in Kartenform, bestehend aus einem Kunststoffkörper, in dessen Inneren ein Elektronikmodul eingebettet ist, welches einen elektronischen Schaltkreis und eine mit diesem verbundene, in der Kartenebene liegende Spule umfaßt, bei welchem Verfahren aus einzelnen Schichten aus Kunststoff und dem Elektronikmodul ein Kartenaufbau gebildet wird, wobei die beiden Außenschichten einen höheren Schmelzpunkt aufweisen als andere Schichten, und der so gebildete Kartenaufbau unter Einwirkung von Druck und Hitze zu dem Datenträger in Kartenform verpreßt wird, **dadurch gekennzeichnet, daß** das Elektronikmodul (8) zwischen zwei Schichten (7) aus einem thermoplastischen Kunststoff mit einem Schmelzpunkt unter 150°C eingelegt wird auf diese Schichten (7) außenseitig Follen (5) aus einem Kunststoff mit einem Schmelzpunkt über 150°C aufgebracht werden und durch Verpressen des so gebildeten Kartenaufbaus bei Temperaturen unterhalb des Schmeizpunktes der Außenschichten (5) und oberhalb des Schmelzpunktes der beidseits des Elektronikmoduls (8) angeordneten Schichten (7) das Elektronikmodul (8) in eine aus diesen Schichten (7) gebildete Kernschicht eingebettet wird.

12. Verfahren nach Anspruch 11, **dadurch gekennzeichnet, daß** als Außenschichten (5) Follen aus einem zugfesten Kunststoff verwendet werden und gegebenenfalls zwischen den Schichten (7) aus niedrigschmelzendem thermoplastischen Kunststoff und den Außenschichten (5) aus hochschmelzendem zugfesten Kunststoff als Haftvermittler eine beschichtete Heißkidebefolle (6) eingebracht wird.

13. Verfahren nach Anspruch 11 oder 12, **dadurch gekennzeichnet, daß** in einem ersten Schritt die einzelnen Schichten (5,6,7) des Kartenaufbaus evakuiert werden, daß in einem zweiten Schritt diese Schichten (5,6,7) unter geringem Druck auf eine Temperatur über dem Schmelzpunkt der Schichten (7) aus niedrigschmelzendem thermoplastischen Kunststoff erhitzt werden, daß in einem dritten Schritt die einzelnen Schichten (5,6,7) gegeneinander verpreßt werden, sodaß das Elektronikmodul (8) in die Kernschicht eingebettet wird, und daß in einem vierten Schritt die Schichten (5,6,7) wieder abgekühlt werden.

14. Verfahren nach Anspruch 13, **dadurch gekennzeichnet, daß** die Schichten (5,6,7) Im zweiten Schritt auf eine Temperatur von 100°C bis 180°C erhitzt werden, vorzugsweise auf etwa 150°C, daß die Schichten (5,6,7) im dritten Schritt unter Druckeinwirkung von 1 bis 3 kp/qcm, vorzugsweise etwa 2 kp/qcm, verpreßt werden.

15. Verfahren nach Anspruch 13, **dadurch gekennzeichnet, daß** die Schichten (5,6,7) mittels Preßplatten (9) im zweiten Schritt zwischen 20 und 150 Sekunden erhitzt werden.

16. Verfahren nach einem der Ansprüche 11 bis 15, **dadurch gekennzeichnet, daß** die einzelnen Schichten (5,6,7) des Kartenaufbaus in einer Einlegestation (11) zwischen Werkzeugplatten (9) eingelegt werden, daß diese Werkzeugplatten (9) in eine Heizpresse (12) überführt werden, wobei in einem ersten Schritt die Werkzeugplatten (9) ohne Erhitzung evakuiert werden, daß die Heizpresse (12) In einem zweiten Schrift druckarm geschlossen und die Werkzeugplatten (9) mit den innenliegenden Schichten (5,6,7) erhitzt werden, daß nach Erreichen der Schmelztemperatur der die Kernschicht bildenden Schichten (7) die Heizpresse (12) unter Druck geschlossen wird, daß die Werkzeugplatten (9) anschließend in eine Kühlpresse (13) übergeführt werden und dort unter Druck abgekühlt werden.

## Claims

1. A data carrier configured as a card, comprising a plastic body with an electronic module embedded therein which contains an electronic circuit and a coil lying in the plane of the card connected therewith, **characterised in that** the electronic module (8) is embedded in a core layer (7) of thermoplastic plastic, the melting point of which is less than 150° C and that foils (5) which have a melting point above 150° C are disposed on both sides of the core layer (7).

2. A data carrier according to claim 1, **characterised in that** the core layer (7) has a melting point of less than 140° C, preferably between 100° C and 120° C.

3. A data carrier according to claim 1, **characterised in that** the foils (5) disposed on the core layer (7) have a melting point above 180° C, preferably between 200° C and 250° C.

4. A data carrier according to one of claims 1 to 3, **characterised in that** the foils (5) disposed on the core layer (7) have a tensile strength of greater than 100 N/mm², preferably between 130 and 200 N/mm².

5. A data carrier according to one of claims 1 to 4, **characterised in that** the core layer (7) is between 0.4 and 0.8 mm thick, preferably 0.6 mm, that the foils (5) disposed thereon are between 0.05 and 0.15 mm, preferably 0.075 mm thick, wherein the foils (5) and the core layer (7) are optionally joined by means of a melt adhesive layer (6) with a thickness of between 0.02 and 0.15 mm.

6. A data carrier according to one of claims 1 to 5, **characterised in that** the electronic module (8) contains a coil with a thickness of between 0.2 and 0.5 mm, preferably a wound wire coil with a thickness if 0.25 to 0.45 mm.

7. A data carrier according to claim 6, **characterised in that** the wire coil lies in the middle of the neutral fibres of the core layer (7) and preferably extends almost to the edges of the card.

8. A data carrier according to claim 6, **characterised in that** the electronic circuit of the electronic module (8) contains an encapsulated chip with a thickness of 0.5 to 0.65 mm.

9. A data carrier according to one of claims 1 to 8, **characterised in that** the externally-disposed foils (5) are transparent and that they are printed on their sides which face the core layers (7).

10. A data carrier according to one of claims 1 to 8, **characterised in that** the externally-disposed foils (5) are coated with a thermoplastic varnish on their outsides.

11. A process for the production of a data carrier configured as a card, comprising a plastic body with an electronic module embedded therein which contains an electronic circuit and a coil lying in the plane of the card connected therewith, via which process a card structure is built up of individual layers of plastic and the electronic module, wherein the two outer layers have a higher melting point than the other layers and the card structure which is formed in this way is compressed under the effect of pressure and heat into the data carrier configured as a card, **characterised in that** the electronic module (8) is placed between two layers (7) of thermoplastic plastic with a melting point of less than 150° C, foils (5) of a plastic with a melting point greater than 150° C are placed on these layers (7) and the electronic module (8) is embedded in a core layer formed from these layers (7) by compressing the thus-formed card structure at temperatures below the melting point of the outer layers (5) and above the melting point of the layers (7) disposed on either side of the electronic module (8).

12. A process according to claim 11, **characterised in that** foils (5) of tension-proof plastic are used as outer layers and that a coated heat-sealing foil (6) is optionally placed as an adhesive between the layers (7) of low-melting point thermoplastic plastic and the outer layers (5) of high-melting point tension-proof plastic.

13. A process according to claim 11 or 12,
**characterised in that** in a first step the individual layers (5, 6, 7) are evacuated, that in a second step these layers (5, 6, 7)are heated at low pressure to a temperature above the melting point of the layers (7) of low-melting point thermoplastic plastic, that in a third step the individual layers (5, 6, 7) are compressed together so that the electronic module (8) is embedded in the core layer and that in a fourth step the layers (5, 6, 7) are cooled again.

14. A process according to claim 13, **characterised in that** the layers (5, 6, 7) are heated in the second step to a temperature from 100° C to 180° C, preferably to approximately 150° C, that the layers (5, 6, 7) are compressed in the third step at a pressure of 1 to 3 kp/cm², preferably approximately 2 kp/cm².

15. A process according to claim 13, **characterised in that** the layers (5, 6, 7) are heated by means of compression plates (9) in a second step for between 20 and 150 seconds.

16. A process according to one of claims 11 to 15, **characterised in that** the individual layers (5, 6, 7) of the card structure are placed between tool plates (9) in an insertion station (11), that these tool plates (9) are transferred to a hot press (12), wherein in a first step the tool plates (9) are evacuated without heat, that the hot press (12) is closed at low pressure in a second step and the tool plates (9) with the contained layers (5, 6, 7) are heated , that after reaching the melt temperature of the layers (7) which form the core layer the hot press (12) is closed under pressure, that the tool plates (9) are then transferred to a cool press (13) and are there cooled under pressure.

## Revendications

1. Support de données sous forme de carte, constitué d'un corps en matière plastique à l'intérieur duquel est noyé un module électronique qui comprend un circuit électronique et une bobine située dans le plan de la carte, reliée audit circuit, **caractérisé en ce que** le module électronique (8) est noyé dans une couche centrale (7) en matière thermoplastique dont le point de fusion est inférieur à 150°C, et que des feuilles (5), dont le point de fusion est supérieur à 150°C, sont disposées de chaque côté de la couche centrale (7).

2. Support de données suivant la revendication 1, **caractérisé en ce que** la couche centrale (7) présente un point de fusion inférieur à 140°C, situé de préférence entre 100°C et 120°C.

3. Support de données suivant la revendication 1, **caractérisé en ce que** les feuilles (5) posées sur la couche centrale (7) possèdent un point de fusion supérieur à 180°C, situé de préférence entre 200°C et 250°C.

4. Support de données suivant l'une des revendications 1 à 3, **caractérisé en ce que** les feuilles (5) posées sur la couche centrale (7) présentent une résistance à la traction supérieure à 100 N/gmm, située de préférence entre 130 et 200 N/gmm.

5. Support de données suivant l'une des revendications 1 à 4, **caractérisé en ce que** la couche centrale (7) a une épaisseur comprise entre 0,4 et 0,8 mm, de préférence égale à 0,6 mm, que les feuilles (5) posées sur ladite couche ont une épaisseur comprise entre 0,05 et 0,15 mm, de préférence égale à 0,075 mm, les feuilles (5) et la couche centrale (7) étant éventuellement reliées au moyen d'une couche de colle à fusion (6) d'une épaisseur de 0,02 à 0,6 mm.

6. Support de données suivant l'une des revendications 1 à 5, **caractérisé en ce que** le module électronique (8) comprend une bobine d'une épaisseur de 0,2 à 0,5 mm, de préférence une bobine métallique d'une épaisseur de 0,25 à 0,45 mm.

7. Support de données suivant la revendication 6, **caractérisé en ce que** la bobine métallique est située au centre de la fibre neutre de la couche centrale (7) et arrive de préférence juste aux bords de la forme de la carte.

8. Support de données suivant la revendication 6, **caractérisé en ce que** le circuit électronique du module électronique (8) comprend une chip coulée d'une épaisseur de 0,5 à 0,65 mm.

9. Support de données suivant l'une des revendications 1 à 8, **caractérisé en ce que** les feuilles (5) situées à l'extérieur sont transparentes et qu'elles sont imprimées sur leur face tournée vers les couches centrales (7).

10. Support suivant l'une des revendications 1 à 8, **caractérisée en ce que** les feuilles (5) situées à l'extérieur sont enduites sur leur face extérieure d'un vernis thermoplastique.

11. Procédé de fabrication d'un support de données sous forme de carte, comprenant un corps en matière plastique, au centre duquel est noyé un module électronique, qui comprend un circuit électronique et une bobine située dans le plan de la carte, reliée audit circuit, dans lequel on forme une structure de carte à partir de différentes couches en matière plastique et du module électronique, les deux couches extérieures présentant un point de fusion supérieur à celui des autres couches, et la structure de carte ainsi formée étant comprimée sous l'effet de pression et de chaleur pour obtenir le support de données sous forme de carte, **caractérisé en ce que** le module électronique (8) est placé entre deux couches (7) en matière plastique thermoplastique dont le point de fusion est inférieur à 150°C, que des feuilles (5)en matière plastique ayant un point de fusion supérieur à 150°C sont déposées sur la face extérieure de ces couches (7) et que le module électronique (8) est noyé dans une couche centrale (7) formée par ces couches (7), par compression de la structure de carte ainsi formée à des températures inférieures au point de fusion des couches extérieures (5) et supérieures au point de fusion des couches disposées de chaque côté du module électronique (8).

12. Procédé suivant la revendication 11, **caractérisé en ce qu'**on utilise, pour les couches extérieures (5), des feuilles en matière plastique résistant à la traction et qu'on dispose éventuellement, entre les couches (7) en matière plastique à faible point de fusion et les couches extérieures (5) en matière plastique résistant à la traction et à point de fusion élevé, une feuille thermoadhésive enduite (6), comme agent de collage.

13. Procédé suivant la revendication 11 ou 12, **caractérisé en ce que**, dans une première opération, le vide est fait dans les premières couches (5, 6, 7) de la structure de la carte, que dans une deuxième opération, ces couches (5, 6, 7) sont chauffées, à une faible pression, à une température supérieure au point de fusion des couches (7) en matière thermoplastique à faible point de fusion, que dans une troisième opération, les différentes couches (5, 6, 7) sont pressées l'une contre l'autre, de sorte que le module électronique (8) est noyé dans la couche centrale et que, dans une quatrième opération, les couches (5, 6, 7) sont refroidies.

14. Procédé suivant la revendication 13, **caractérisé en ce que** les couches (5, 6, 7), au cours de la deuxième opération, sont chauffées à une température de 100°C à 180°C, de préférence à environ 150°C, et que les couches (5, 6, 7), dans la troisième opération, sont comprimées par une pression de 1 à 3 kp/cm², de préférence d'environ 2kp/cm².

15. Procédé suivant la revendication 13, **caractérisé en ce que** les couches (5, 6, 7) sont chauffées, dans la deuxième opération, au moyen de plaques de pression (9) pendant une durée de 20 à 150 secondes.

16. Procédé suivant l'une des revendications 11 à 15, **caractérisé en ce que** les différentes couches (5, 6, 7) de la structure de la carte sont insérées dans une station d'insertion (11) entre des plaques (9), que ces plaques (9) sont transférées à une presse chauffante (12), où elles sont mises sous vide sans chauffage dans une première opération, que la presse chauffante (12) est fermée sous une faible pression dans une deuxième opération et que les plaques (9) sont chauffées avec les couches (5, 6, 7) situées à l'intérieur, que la presse chauffante (12) est fermée sous pression après avoir atteint la température de fusion des couches (7) formant la couche centrale et que les plaques (9) sont ensuite transférées à une presse de refroidissement (13) où elles sont mises à refroidir sous pression.
